**Europäisches Patentamt**

**European Patent Office**

**Office européen des brevets**

(19)

(11) Veröffentlichungsnummer: **0 083 013**

**A1**

(12) # EUROPÄISCHE PATENTANMELDUNG

(21) Anmeldenummer: **82111530.0**

(22) Anmeldetag: **13.12.82**

(51) Int. Cl.³: **C 09 D 3/64**

(30) Priorität: **24.12.81 DE 3151442**

(43) Veröffentlichungstag der Anmeldung:
**06.07.83 Patentblatt 83/27**

(84) Benannte Vertragsstaaten:
**AT DE FR GB IT NL SE**

(71) Anmelder: **BAYER AG**
**Zentralbereich Patente, Marken und Lizenzen**
**D-5090 Leverkusen 1, Bayerwerk(DE)**

(72) Erfinder: **Dhein, Rolf, Dr.**
**Deswatinesstrasse 30**
**D-4150 Krefeld 1(DE)**

(72) Erfinder: **Wagner, Kuno, Dr.**
**Am Kiesberg 8**
**D-5090 Leverkusen 1(DE)**

(72) Erfinder: **Schoeps, Jochen, Dr.**
**Windmühlenstrasse 126**
**D-4150 Krefeld 1(DE)**

(72) Erfinder: **Beer, Wolfgang, Dr.**
**Heyenfeldweg 132**
**D-4150 Krefeld 1(DE)**

(54) **Einbrennlackbindemittel auf Basis von Polyestern und Verfahren zu ihrer Herstellung.**

(57) N-Methoxymethylcaprolactam eignet sich hervorragend als Reaktivverdünner für Einbrennlacke auf Basis von Polyestern.

Croydon Printing Company Ltd

BAYER AKTIENGESELLSCHAFT   5090 Leverkusen, Bayerwerk

Zentralbereich
Patente, Marken und Lizenzen   Pv/ABc

Einbrennlackbindemittel auf Basis von Polyestern und
Verfahren zu ihrer Herstellung

Die Erfindung betrifft Bindemittel für Einbrennlacke aus Polyestern, Reaktivverdünnern und gegebenenfalls Aminoplastharzen sowie ein Verfahren zu ihrer Herstellung.

Reaktivverdünner sind niedrigviskose Stoffe, die harzartige Bindemittel verdünnen und dadurch dem Lack die zu seiner Applikation notwendige Viskosität verleihen, zur Mischpolymerisation oder Mischkondensation mit dem Lackharz befähigte funktionelle Gruppen enthalten und beim Härtungsvorgang zum überwiegenden Teil - jeweils in Abhängigkeit von ihrer Flüchtigkeit - Bestandteil des gehärteten Lackfilms werden. Die damit verbundene verminderte Umweltbelastung gewinnt zunehmend an Bedeutung.

Polyester-Einbrennlacke, die Reaktivverdünner enthalten, sind bekannt (DE-OS 22 53 300, 24 33 389, 24 39 548, 25 05 246).

Bei der Verwendung von z.B. Polyolen, wie Glycerin, als Reaktivverdünner besteht die Gefahr, daß sich durch einen Anstieg der Zahl freier Hydroxylgruppen des Binde-

Le A 21 477 - Ausland

mittels eine gesteigerte Hydrophilie des gehärteten Lackfilms entwickelt, die eine unerwünschte Qualitätsverminderung der Lackschichten, z.B. geringeren Glanz oder schlechtere Wetterfestigkeit, bewirken kann. Zwar ist eine derartige Erscheinung durch Erhöhung des Anteils der Vernetzungsmittel zu kompensieren, doch muß man dann in der Regel eine Verringerung der Filmelastizität in Kauf nehmen. Dies gilt sowohl für wäßrige als auch für nicht-wäßrige Lacke.

Es bestand also ein Bedürfnis nach Reaktivverdünnern, die denen des Standes der Technik überlegen sind und in Kombination mit Polyestern und gegebenenfalls Amino- oder Phenoplastharzen Lackierungen höchster Qualität liefern.

Überraschenderweise sind nun N-Alkoxy-methyl-$\varepsilon$-caprolactame Reaktivverdünner mit ausgezeichneter Reaktivität, die mit wäßrigen und nicht wäßrigen Polyester-Einbrennlacken bei relativ niedrigen Temperaturen zu glänzenden, harten und dennoch elastischen Lackierungen mit ausgezeichneter Haftfestigkeit führen, die gegen Säuren, Laugen und Chemikalien äußerst unempfindlich sind.

Gegenstand der Erfindung sind also Einbrennlackbindemittel aus

A)   40 bis 90, vorzugsweise 60 bis 80, Gewichtsteilen Polyester mit einer Säurezahl von 1 bis 100, vorzugsweise von 5 bis 50, insbesondere von 5 bis 20, einer Hydroxyzahl von 40 bis 400 und einem mittleren Molekulargewicht von 1500 bis 10 000,

Le A 21 477

B)    10 bis 60, vorzugsweise 20 bis 40, Gewichtsteilen
Reaktivverdünner und gegebenenfalls

C)    10 bis 40 Gewichtsteilen Amino- und/oder Phenoplastharz,

dadurch gekennzeichnet, daß der Reaktivverdünner B N-
Alkoxymethylcaprolactam ist.

Weiterer Gegenstand der Erfindung ist ein Verfahren zur
Herstellung dieser Bindemittel, dadurch gekennzeichnet,
daß man die Komponenten A, B und gegebenenfalls C miteinander vereinigt.

Unter Polyestern A versteht man durch Polykondensation
nach bekannten Verfahren aus Alkoholen und Carbonsäuren
hergestellte ölfreie ebenso wie Fettsäure-modifizierte
Polykondensate der Art, wie sie z.B. im Römpp's Chemielexikon, Bd. 1, S. 202, Frankh'sche Verlagsbuchhandlung,
Stuttgart, 1966 definiert oder bei D.H. Solomon, The Chemistry of Organic Filmformers, S. 75 - 101, John Wiley &
Sons Inc., New York, 1967, beschrieben sind.

Für die Synthese der Polyester A bevorzugte Alkohole
sind aliphatische, cycloaliphatische und/oder araliphattische Alkohole mit 1 - 6, vorzugsweise 1 - 4, an nichtaromatische C-Atome gebundenen OH-Gruppen und 1 - 24 C-
Atomen pro Molekül, z.B. Glykole wie Ethylenglykol, Propylenglykol, Butandiole, Neopentylglykol, Hexandiole;
Etheralkohole wie Di- und Triethylenglykole sowie Dianhydrosorbit und -mannit; oxethylierte Bisphenole; per-

Le A 21 477

hydrierte Bisphenole; ferner Trimethylolethan, Trimethylolpropan, Glycerin, Pentyerythrit, Dipentaerythrit, Mannit und Sorbit; einwertige, kettenabbrechende Alkohole wie Propanol, Butanol, Cyclohexanol und Benzylalkohol.

Für die Synthese der Polyester A bevorzugte Säurekomponenten sind aliphatische, cycloaliphatische, gesättigte oder ungesättigte und aromatische mehrbasische Carbonsäuren, vorzugsweise Di- und Tricarbonsäuren, mit 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Trimellithsäureanhydrid, Pyromellithsäureanhydrid, Maleinsäureanhydrid, Fumarsäure, Adipinsäure, Sebacinsäure, Glutarsäure und Bernsteinsäureanhydrid, Azelainsäure, Endomethylentetrahydrophthalsäure, ferner halogenierte Säuren, wie 3,4,5,6-Tetrachlorphthalsäure und Hexachlor-endomethylentetrahydrophthalsäure.

Für die Herstellung der Polyester A bevorzugte Monocarbonsäuren sind aliphatische, cycloaliphatische, gesättigte und ungesättigte und aromatische Monocarbonsäuren mit 6 bis 24 C-Atomen pro Molekül wie Benzoesäure, Butylbenzoesäure, Tolylsäure, Hexahydrobenzoesäure, Abietinsäure, Milchsäure sowie Fettsäuren und Ester derselben wie Leinöl, Sojaöl, Holzöl, Sonnenblumenöl, Saffloröl, Ricinusöl, Ricinenöl, Baumwollsaatöl, Erdnußöl, Oiticicaöl, Tallölfettsäure, Leinölfettsäure, Sojaöl-,

Le A 21 477

Holzöl-, Sonnenblumenöl-, Oiticicaöl-, Saffloröl- und Ricinenölfettsäure und aus natürlichen, ungesättigten Ölen oder Fettsäuren durch Konjugierung oder Isomerisierung gewonnene Produkte; geeignete gesättigte Fettsäuren sind beispielsweise Cocosölfettsäure und ⌐-Ethylhexansäure sowie Isotridecansäure.

Falls die Polyester A wasserverdünnbar sein sollen, empfiehlt sich die Umsetzung mit Dicarbonsäureanhydriden und gegebenenfalls die Neutralisation der so erhaltenen Halbester.

Bevorzugte Dicarbonsäureanhydride sind Phthalsäureanhydrid, Maleinsäureanhydrid, Bernsteinsäureanhydrid, Tetrahydro- und Hexahydrophthalsäureanhydrid.

Die mittleren Molekulargewichte der Polyester A werden als Zahlenmittel osmometrisch in Aceton bestimmmt.

Bevorzugte Neutralisationsmittel für die Polyester A sind Alkalihydroxide, Ammoniak, primäre, sekundäre und tertiäre Amine, wie z.B. Ethylamin, Di- und Triethylamin, Mono-, Di- und Triethanolamin, Dimethylethanolamin, Methyldiethanolamin, Dimethylaminomethylpropanol.

Bevorzugte N-Alkoxymethylcaprolactame sind beispielsweise:

N-n- und -tert.-Butoxymethylcaprolactam, N-n- und -iso-Propoxymethylcaprolactam, N-Ethoxymethylcaprolactam und vorzugsweise N-Methoxymethylcaprolactam.

Le A 21 477

Als Aminoplastharze C sind Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 bis 4 C-Atomen veretherten Melamin-Formaldehyd-Kondensate, wie sie z.B. in der FR-PS 943 411 oder bei D.H. Solomon, The Chemistry of Organic Filmformers, 235-240, John Wiley & Sons, Inc., New York, 1967, beschrieben sind. Die Melaminharze können jedoch auch ganz oder teilweise durch andere vernetzende Aminoplasten, wie sie z.B. in "Methoden der Organischen Chemie" (Houben-Weyl), Bd. 14/2, 4. Aufl., Georg Thieme Verlag, Stuttgart, 1963, 319 ff. beschrieben sind, oder durch Phenoplaste, wie sie ibid., 193 ff. beschrieben sind, ersetzt werden.

Den erfindungsgemäßen Einbrennlackbindemitteln können Pigmente, wie Titandioxid, Eisenoxid, Chromoxid, Zinksulfid, Ruß, Aluminiumbronze, Füllstoffe, wie Kieselsäure und Lackhilfsmittel, wie Verlaufsmittel, zugesetzt werden.

Die Lacke lassen sich nach üblichen Applikationstechniken, z.B. durch Tauchen, Spritzen, Gießen, Streichen, auftragen.

Die Härtung kann bei Temperaturen von 80 bis 230, vorzugsweise von 120 bis 160°C, erfolgen.

Die in den nachfolgenden Beispielen genannten Teilen sind Gewichtsteile.

Le A 21 477

## Beispiele

### Beispiel 1

898 Teile Pentaerythrit, 521 Teile Trimethylolpropan-1,1,1, 1576 Teile Sojaölfettsäure, 384 Teile Benzoesäure, 151 Teile ∝-Ethylhexansäure und 1368 Teile Phthalsäureanhydrid wurden bei 220°C verestert bis zu einer Säurezahl von 6,1 und einer Viskosität entsprechend einer Auslaufzeit von 38 sec (gemessen nach DIN 53 211, 50 %ig in Xylol). 4102 Teile dieses Polyesters wurden dann mit 459,7 Teilen Tetrahydrophthalsäureanhydrid bis auf eine Gesamtsäurezahl von 46,6 aufgesäuert. Die Viskosität (gemessen nach DIN 53 211, 50 %ig in Xylol) entsprach einer Auslaufzeit von 83 sec. Mit diesem Bindemittel wurde ein Einbrennlack folgender Zusammensetzung hergestellt:

    19,88 Teile Polyester,
     8,52 Teile N-Methoxymethylcaprolactam,
     3,18 Teile Isopropanol,
     6,95 Teile methyliertes Methylolmelaminharz,
           90 %ig in Isopropanol,
    26,60 Teile Titandioxid,
     0,30 Teile Verlaufsmittel und
    34,57 Teile Wasser.

Durch Zugabe von 2,4 Teilen Wasser wurde auf Spritzviskosität entsprechend einer Auslaufzeit von 49 sec (gemessen nach DIN 53 211) eingestellt.

Le A 21 477

Mit diesem Lack bei 120°C hergestellte Einbrennlackierungen zeichnen sich durch hohen Glanz, gute Haftung und Elastizität sowie ausgezeichneten Korrosionsschutz aus.

Beispiel 2

1355 Teile Trimethylolpropan-1,1,1, 1346,6 Teile Phthalsäureanhydrid, 147,5 Teile Adipinsäure, 1124,1 Teile Sojaölfettsäure und 526,7 Teile Cyclohexanol wurden bei 220°C bis zu einer Säurezahl von 6,2 verestert. 3634,7 Teile dieses Polyesters wurden dann mit 264,9 Teilen Phthalsäureanhydrid bei 200°C auf eine Viskosität entsprechend einer Auslaufzeit von 103 sec (gemessen nach DIN 53 211, 60 %ig in Xylol) weiterverestert. Mit diesem Bindemittel wurde ein Lack folgender Zusammensetzung hergestellt:

> 50,0 Teile Polyester,
> 30,0 Teile Methoxymethylcaprolactam,
> 20,0 Teile methyliertes Methylolmelamin,
> 80,0 Teile Titandioxid und
> 0,5 Teile Katalysator.

Dieser Lack wurde 20 Minuten bei 140°C eingebrannt und zeichnete sich durch gute Härte und Haftfestigkeit aus.

Le A 21 477

Patentansprüche

1. Einbrennlackbindemittel aus

A) 40 bis 90 Gewichtsteilen Polyester mit einer Säurezahl von 1 bis 100, einer Hydroxylzahl von 40 bis 400 und einem mittleren Molekulargewicht von 1500 bis 10 000,

B) 10 bis 60 Gewichtsteilen Reaktivverdünner und gegebenenfalls

C) 10 bis 40 Gewichtsteilen Amino- und/oder Phenoplastharz,

dadurch gekennzeichnet, daß der Reaktivverdünner B N-Alkoxymethylcaprolactam ist.

2. Einbrennlackbindemittel nach Anspruch 1, dadurch gekennzeichnet, daß es 60 bis 80 Gewichtsteile des Polyesters A enthält.

3. Einbrennlackbindemittel nach Ansprüchen 1 und 2, dadurch gekennzeichnet, daß es 20 bis 40 Gewichtsteile des Reaktivverdünners B enthält.

4. Einbrennlackbindemittel nach Ansprüchen 1-3, dadurch gekennzeichnet, daß der Reaktivverdünner B ein N-$C_1$-$C_4$-Alkoxymethylcaprolactam ist.

Le A 21 477

5. Einbrennlackbindemittel nach Ansprüchen 1-4, dadurch gekennzeichnet, daß der Reaktivverdünner B N-Methoxymethylcaprolactam ist.

6. Verfahren zur Herstellung der Einbrennlackbindemittel nach Ansprüchen 1-5, dadurch gekennzeichnet, daß man die Komponenten A, B und gegebenenfalls C miteinander vereinigt.

Le A 21 477

Europäisches
Patentamt

**EUROPÄISCHER RECHERCHENBERICHT**

0083013
Nummer der Anmeldung

EP  82 11 1530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | FR-A-2 300 121  (BAYER)<br>* Ansprüche 1,2 *<br><br>----- | 1 | C 09 D    3/64 |

RECHERCHIERTE
SACHGEBIETE (Int. Cl. ³)

C 09 D    3/00
C 08 L   67/08
C 08 L   67/00

Der vorliegende Recherchenbericht wurde für alle Patentansprüche erstellt

| Recherchenort<br>DEN HAAG | Abschlußdatum der Recherche<br>24-03-1983 | Prüfer<br>DECOCKER L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82